Europäisches Patentamt

European Patent Office

Office européen des brevets

(11) Veröffentlichungsnummer: **0 248 234 B1**

# EUROPÄISCHE PATENTSCHRIFT

(45) Veröffentlichungstag der Patentschrift: 27.03.91

(51) Int. Cl.5: **G02F 1/01**, G02F 2/00

(21) Anmeldenummer: 87106714.6

(22) Anmeldetag: 08.05.87

(54) **Endlos-Polarisationsregelung.**

(30) Priorität: 13.05.86 DE 3615982
23.07.86 DE 3624853

(43) Veröffentlichungstag der Anmeldung:
09.12.87 Patentblatt 87/50

(45) Bekanntmachung des Hinweises auf die
Patenterteilung:
27.03.91 Patentblatt 91/13

(84) Benannte Vertragsstaaten:
AT BE DE ES FR GB GR IT NL SE

(56) Entgegenhaltungen:
US-A- 3 558 215
US-A- 4 327 971

APPLIED OPTICS, Band 18, Nr. 9, 1. Mai 1979,
Seiten 1288-1289, New York, US; M. JOHN-
SON: "In-line-fiber-optical polarization transformer"

IEEE JOURNAL OF QUANTUM ELECTRONICS,
Band QE-17, Nr. 12, Dezember 1981, Seiten
44-45, Nr. WJ12, IEEE, New York, US; R.A.
BERGH et al.: "Single-mode fiber optic components"

(73) Patentinhaber: **Siemens Aktiengesellschaft**
**Wittelsbacherplatz 2**
**W-8000 München 2(DE)**

(72) Erfinder: **Noé, Reinhold, Dipl.-Ing.**
**Salzbacher Strasse 6**
**W-8000 München 40(DE)**

**Beschreibung**

Die Erfindung betrifft ein Verfahren zur Polarisationsregelung entsprechend dem Oberbegriff des Anspruchs 1. Die Erfindung betrifft dabei neben dem Bereich des sichtbaren Lichtes auch die angrenzenden Wellenlängenbereiche.

Unter Doppelbrechung von Licht wird im folgenden die Verzögerung verstanden, die zwischen zwei mit jeweils einem Eigenmodus des die Doppelbrechung verursachenden Elementes auftretenden Licht-Komponenten feststellbar ist, diese beiden Eigenmoden unterscheiden sich durch ihre Ausbreitungsgeschwindigkeit.

Eine bekannte Anordnung zur Polarisationsregelung ist in APPLIED OPTICS Vol. 18, No. 9, 1. May 1979, Seiten 1288 und 1289 beschrieben. Bei der bekannten Anordnung ist zwischen dem beweglichen Anker und einem unbeweglichen Teil eines Relais ein Lichtwellenleiter angeordnet, auf den der Anker mechanischen Druck ausüben kann. Durch diesen Druck werden die beaufschlagten Teile des Lichtwellenleiters linear doppelbrechend, wobei Phasendifferenzen der Hauptachskomponenten der durchlaufenden kohärenten Lichtwelle entstehen, die in einem bestimmten Bereich linear vom ausgeübten Druck abhängig sind. Aus Festigkeitsgründen ist ein bestimmter Bereich der Doppelbrechung vorgegeben, in dem durch Änderung des angewandten Druckes der Arbeitspunkt verschiebbar ist. Zur Druckerzeugung können anstelle der Relais auch piezoelektrische Elemente verwendet werden, mit denen eine höhere Einstellgeschwindigkeit möglich ist. Im Bereich der integrierten Optik können unter Anwendung von auf einem Substrat aufgebrachtem Lithiumniobat doppelbrechende Elemente hergestellt werden, deren Doppelbrechung in Abhängigkeit von einem elektrischen Feld veränderbar ist. In ähnlicher Weise kann für Zwecke der Mikrowellenübertragung z.B. der Querschnitt von Hohlleitern verändert und damit eine verstellbare Doppelbrechung erzeugt werden.

Bei der bekannten Anordnung besteht das Problem, daß eine Änderung der Arbeitspunkte eines oder mehrerer der doppelbrechenden Elemente ohne Veränderung der am Ausgang der Gesamtordnung wirksamen Polarisation nur in Spezialfällen möglich ist. Damit können aber bei der Rückführung eines an einer Bereichsgrenze angelangten Arbeitspunktes eines Elementes entsprechend dem Stand der Technik wesentliche Intensitätsverluste bis zum völligen Signalverlust auftreten.

Aus "Electronics Letters" vom 16. Jan. 1986, Seite 100 bis 102 ist bereits eine Polarisationsregelung bekannt, die als Endlos-Regelung unterbrechungsfrei einen bestimmten Polarisationszustand am Eingang in jeden beliebigen Polarisationszustand am Ausgang umformen kann und dazu in einen Polarisationstransformator drei linear doppelbrechende Elemente und ein weiteres zirkular doppelbrechendes Element enthält. Der Aufbau einer derartigen Anordnung ist schwierig, da beispielsweise für das zirkular doppelbrechende Element mehr als 100 Meter Glasfaserlänge erforderlich sind, die, in ein Magnetfeld eingebracht, die gewünschte zirkulare Doppelbrechung ergeben.

Es ist aus den Veröffentlichungen zur Fibre Optics Conference, London, 30.04-01.05.1986, SPIE, bereits bekannt, daß mit 5 doppelbrechenden Elementen jeder beliebige Polarisationszustand in jeden anderen beliebigen Polarisationszustand endlos umgeformt werden kann, mit 4 doppelbrechenden Elementen können nur bestimmte Polarisationszustände in jeden beliebigen Polarisationszustand endlos umgeformt werden. Dabei werden linear doppelbrechende Elemente mit 2 unterschiedlichen Azimutwinkeln verwendet, die Endlosfunktion erfordert dabei nur einfache lineare Verstellbewegungen.

Die Aufgabe bei der vorliegenden Erfindung besteht also darin, ein Verfahren zur Polarisationsregelung der eingangs erwähnten Art so weiterzubilden, daß eine Änderung des Arbeitspunktes eines Elementes insbesondere in der Nähe der Bereichsgrenze der Doppelbrechung dieses Elementes möglich ist, ohne daß es zu einer Änderung der am Ausgang der Gesamtanordnung wirksamen Polarisation und damit zu Intensitätsverlusten kommt, dabei sollte das Verfahren mit möglichst geringem Aufwand realisierbar sein.

Erfindungsgemäß wird die Aufgabe durch die im Anspruch 1 enthaltenen Merkmale gelöst.

Das erfindungsgemäße Verfahren bietet in vorteilhafter Weise die Möglichkeit, eine Polarisationsregelung zu realisieren, die außer 3 Elementen mit verstellbarer Doppelbrechung keine weiteren Elemente aufweist, die im Lichtweg angeordnet sind. Im Hinblick auf eine Nachführung einer sich kontinuierlich ändernden Polarisation ist beim Erfindungsgegenstand mit vergleichsweise geringem Aufwand eine Endlos-Polarisationsregelung mit einem unbegrenzten Nachführbereich möglich, während beim Stande der Technik entweder Nachführbereiche in der Größenordnunvon einigen 1800 bei einfachem Aufbau oder eine Endlos-PolaAsationsregelung bei vergleichsweise kompliziertem Aufbau mit 4 Elementen mit verstellbarer Doppelbrechung erreichbar sind.

Weiterbildungen des erfindungsgemäßen Verfahrens sind in den Patentansprüchen 2 bis 5 und eine Anordnung zur Durchführung des erfindungsgemäßen Verfahrens ist im Patentansprüchen 7 bis 9 näher beschrieben.

EP 0 248 234 B1

Die Erfindung soll im folgenden anhand eines in der Zeichnung dargestellten Ausführungsbeispiels näher erläutert werden.

Dabei zeigt

Fig. 1      die schematische Darstellung einer erfindungsgemäßen Anordnung zur Polarisationsregelung,

Fig. 2      die schematische Darstellung einer Polarisationsregelung für den optischen Überlagerungsempfang und

Fig. 3      Verstellwege auf einer Poincaré-Kugel.

Mit dem Erfindungsgegenstand wird eine Regelung beschrieben, mit der die Polarisation von Licht der Polarisation eines am Ausgang einer Anordnung befindlichen Analysators angeglichen werden kann. Dazu ist die Strahlungsintensität hinter dem Analysator zu bestimmen und zu maximieren. Eine derartige Polarisationsregelung ist in der Lage, Polarisationsänderungen des Analysators zu folgen. Die Polarisation des Lichts am Ausgang der Anordnung wird dabei stets so nachgeführt, daß sie der des Analysators entspricht.

Beim im folgenden betrachteten Anwendungsfall des optischen Überlagerungsempfangs können die Polarisationen von zwei überlagernden Signalen zur Übereinstimmung gebracht werden, wobei der Polarisationsanalysator entfällt und als Regelgröße beispielsweise die Leistung des elektrischen Überlagerungssignals dient. Weiterhin ist eine Anwendung in faseroptischen Kreiseln denkbar.

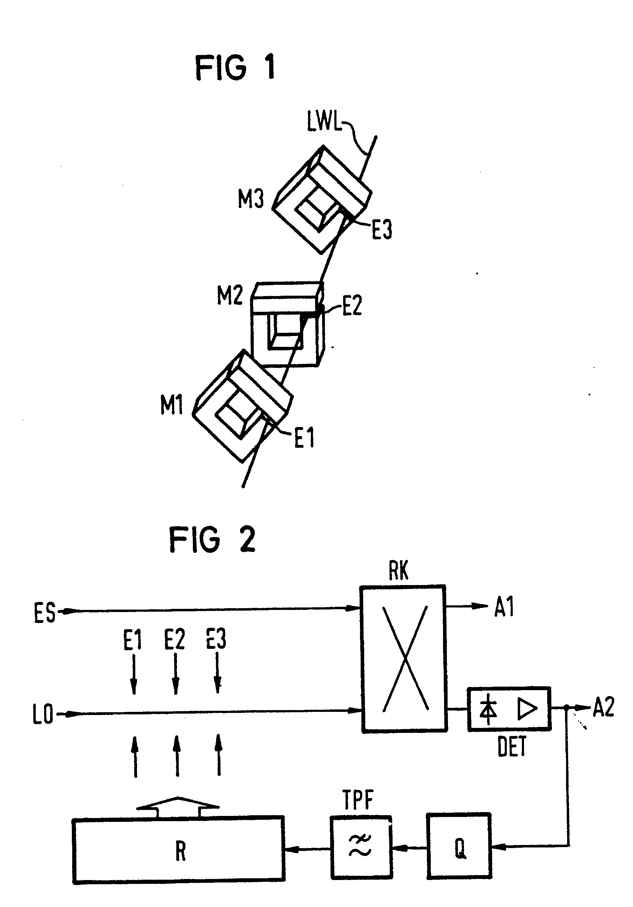

In der Fig. 1 ist eine Stelleinrichtung für eine erfindungsgemäße Anordnung zur Polarisationsregelung dargestellt, die drei Magnete mit UI-Kernen enthält, wobei die I-Schenkel freibeweglich sind und Druck auf einen durch die drei Magnete geführten Lichtwellenleiter mit kreisförmigem Querschnitt ausüben können. Der Einfachheit halber sind dabei nur die Magnetkerne ohne Spulenkörper und Wicklung dargestellt. Die Magnete bilden dabei die Stellglieder, mit der die in den Magneten angeordneten Lichtwellenleiterabschnitte als linear doppelbrechende Elemente verstellt werden können. Die Kraftrichtungen der Magnete liegen in einer Ebene, auf der der Lichtwellenleiter senkrecht steht und abwechselnd bei $45°$ und $0°$ bezogen auf eine Hauptachse. Die Eigenmoden der einzelnen doppelbrechenden Elemente E1, E2, E3 sind linear, dabei sind unter Eigenmoden diejenigen Polarisationszustände zu verstehen, die von doppelbrechenden Elementen nicht verändert werden können. Es tritt ein schneller und ein langsamer Eigenmodus auf, die sich durch ihre Ausbreitungsgeschwindigkeit unterscheiden. Die Polarisation des schnellen Eigenmodus ist parallel zur Kraftrichtung des verwendeten doppelbrechenden Elementes.

Die Arbeitspunkte aller doppelbrechenden Elemente lassen sich beim Ausführungsbeispiel um etwa $720°$ kontinuierlich variieren, um die möglichen Verstellverfahren für eine Endlos-Polarisationsregelung durchführen zu können.

Fig. 2 zeigt die Polarisationsregelung für optischen Überlagerungsempfang. Der Eingang ES erhält das ankommende Licht mit unbekannter Polarisation und ist mit einem zugeordneten Eingang eines Richtkopplers RK verbunden. Ein weiterer Eingang L0 ist an einen lokalen Laser mit einer Polarisation entsprechend einem Eigenmodus des zweiten Elements E2 oder mit einer Polarisation, die durch das erste Element E1 in einem Eigenmodus des zweiten Elements E2 übergeführt werden kann, angeschlossen. Dieser Eingang ist über die Stelleinrichtung als Teil eines Polarisationstransformators nach Fig. 1 mit den drei doppelbrechenden Elementen E1 ... E3 mit einem weiteren Eingang des Richtkopplers RK verbunden. Neben dem optischen Ausgang A1 verfügt der Richtkoppler RK über einen weiteren optischen Ausgang für einen Detektor DET, der eine Photodiode mit nachgeschaltetem Verstärker für das Überlagerungssignal enthält. An den Detektorausgang A2, der einen elektrischen Ausgang darstellt, sind einerseits weitere Anordnungen zur Signalverarbeitung und andererseits ein Quadrierer Q als Teil der Anordnung zur Polarisationsregelung angeschlossen. Der Ausgang des Quadrierers Q ist über ein Tiefpaßfilter TPF mit einem Steuereingang eines Reglers R verbunden, der die Stelleinrichtung nach Fig. 1 steuert.

Der Regler R gibt Stellsignale an die doppelbrechenden Elemente E1, E2, E3 ab. Zusätzlich werden wenigstens zwei Stellsignale, beim Ausführungsbeispiel die des ersten und des zweiten doppelbrechenden Elements, mit vergleichsweise kleinen Rechtecksignalen moduliert. Durch die Rechteckmodulation ergeben sich kleine Abweichungen von den Doppelbrechungs-Arbeitspunkten der Elemente, die sich in kleinen Phasenänderungen und in kleinen Intensitätsänderungen, also Leistungsänderungen des Überlagerungssignals A2, und damit nach Quadrierung in Amplitudenänderungen des Regelsignals für den Regler R auswirken. Vom Regler R werden daraus alle Ableitungen ersten und zweiten Grades der Intensität nach den Doppelbrechungen der Elemente E1, E2 näherungsweise gebildet.

Die Abweichungen von den Doppelbrechungs-Arbeitspunkten lassen sich auch auf andere Weise, wie beispielsweise Frequenzmultiplex erreichen; notwendig ist dabei eine eindeutige Zuordnung der gemessenen Intensitätsänderung zu den doppelbrechenden Elementen.

Der Regler R verstellt die beiden doppelbrechenden Elemente E1, E2 in Richtung des Gradienten. Durch die Auswertung der zweiten Ableitungen werden Sattelpunkte und Minima der Intensität des

3

Überlagerungssignals erkannt und in Richtung auf ein Maximum verlassen. Bei maximaler Intensität des Überlagerungssignals stimmen die Polarisationszustände des Empfangslichts und des lokal erzeugten Lichts überein, so daß damit der gewünschte Betriebszustand erreicht ist. Während eines sich gegebenenfalls anschließenden Nachregelvorgangs ist der Intensitätsverlust äußerst gering, da die Polarisationsschwankungen gegenüber der Regelgeschwindigkeit der Anordnung vergleichsweise langsam sind.

Abweichend zu Fig. 2 könnte die Stelleinrichtung auch zumindest teilweise im anderen Lichtweg angeordnet sein, wobei die Reihenfolge der Elemente vom Eingang L0 über den Richtkoppler RK zum Eingang ES betrachtet, beibehalten wird.

Beim Betrieb eines optischen Überlagerungsempfängers am Ende einer LWL-Strecke kommt es aufgrund von Polarisationsänderungen des Empfängerlichtes zu Nachregelvorgängen. Dadurch kann der Arbeitspunkt eines der doppelbrechenden Elemente an eine Bereichsgrenze geführt werden.

Bei der anschließenden Verstellung kann es zumindest zu kurzfristigen Intensitätsbußen kommen, die sich bei der Übertragung digitaler Signale in Bitfehlern und bei hochratigen digitalen Übertragungssystemen im Streckenausfall auswirken können. Bei der erfindungsgemäßen Polarisatonsregelung handelt es sich demgegenüber um eine Endlosregelung, bei der ein unbegrenzter Nachführbereich ohne Intensitätseinbußen erreicht wird.

Durch einen speziellen Verstellbetrieb wird dabei verhindert, daß der Arbeitspunkt die Bereichsgrenze überschreitet, es kann auch eine Bewegung des Arbeitspunktes von der Bereichsgrenze weg eingeleitet werden.

Während des Verstellbetriebs kommt es bei Anordnung aller doppelbrechenden Elemente in einem Lichtweg nicht zu Polarisationsänderungen des Lichtes am Ausgang des Polarisationstransformators. Wird nur ein einzelnes doppelbrechendes Element verstellt, so ist die Polarisation des Lichts an diesem Element gleich einem seiner Eigenmoden. Im Hinblick auf durch den Verstellbetrieb verursachte Änderungen der Lichtphase ist die Verstellgeschwindigkeit klein gegenüber der Modulationsgeschwindigkeit zu wählen.

Der unbegrenzte Nachführbereich der erfindungsgemäßen Polarisationsregelung beruht auf einer bestimmten Kombination von Maßnahmen, die jeweils das Überschreiten der Bereichsgrenzen eines bestimmten Elementes verhindern. Bei diesen Maßnahmen handelt es sich um:

1. Begrenzung der Doppelbrechung des ersten Elements an den als ganzzahlige Vielfache von $180°$ gewählten Bereichsgrenzen und gegebenenfalls Umschalten der Doppelbrechung des zweiten Elementes E2 um $180°$;

2. Begrenzung der Doppelbrechung des zweiten Elements E2 an den als ungerade Vielfache von $90°$ gewählten Bereichsgrenzen, sofern die Doppelbrechung des ersten Elements E1 ein ungerades Vielfaches von $90°$ beträgt, gegebenenfalls Umschalten der Doppelbrechung des dritten Elements E3 um $180°$;

3. nach Annäherung des Arbeitspunktes der Doppelbrechung des zweiten Elements an die als ganzzahlige Vielfache von $180°$ gewählten Bereichsgrenzen, synchrones Verstellen der Doppelbrechung des ersten und dritten Elements E1, E3 bis die Doppelbrechung des ersten Elements ein Vielfaches von $180°$ erreicht, anschließend Verstellen der Doppelbrechung des zweiten Elements E2 um ein ganzzahliges Vielfaches von $180°$ und abschließend synchrones Verstellen des ersten und dritten Elements E1, E3, vorteilhafterweise bis wenigstens eines der beiden Elemente annähernd seinen Ausgangszustand erreicht hat, wobei die synchronen Verstellungen gleichsinnig erfolgen, wenn die Doppelbrechung des zweiten Elements E2 zum Zeitpunkt des Verstellens ein ungeradzahliges Vielfaches von $180°$ beträgt und gegensinnig bei geradzahligen Vielfachen von $180°$;

4. Verhinderung des Überschreitens der Bereichsgrenzen der Doppelbrechung des dritten Elements E3 durch lineare Verstellung der Doppelbrechung des dritten Elements E3 bei gleichzeitiger periodischer Verstellung der Doppelbrechung des ersten und zweiten Elements E1, E2, wobei sich die Doppelbrechungen $d_1, d_2$ des ersten und zweiten Elementes E1, E2 dadurch ergeben, daß

für $d_{20} \neq 180°$ oder $0°$:

$$d_1 = \cos^{-1}(-\cos d_2 \bullet \sin(d_3 - d_{30}))$$

4

EP 0 248 234 B1

$$
d_2 = \begin{cases} 90° + \sin^{-1}\left(\dfrac{-\cos d_2 \cdot \cos d_3}{\sqrt{1-\cos^2 d_2 \sin^2 d_3}}\right) & \text{für } 0° < d_2-d_{20} < 180° \\[4mm] -90° - \sin^{-1}\left(\dfrac{-\cos d_2 - \cos d_3}{\sqrt{1-\cos^2 d_2 \sin^2 d_3}}\right) & \text{für } -180° < d_2-d_{20} < 0° \end{cases}
$$

ist, und

für $d_{20} = 180°$ oder $0°$:

$$
d_1 = \begin{cases} 90° + (d_3 - d_{30}) & \text{für } -90° \leq d_3-d_{30} \leq 90° \\[2mm] 270° - (d_3 - d_{30}) & \text{für } 90° \leq d_3-d_{30} \leq 270° \end{cases}
$$

$$
d_2 = \begin{cases} 180° & \text{für } -90° \leq d_3-d_{30} \leq 90° \\[2mm] 0° & \text{für } 90° \leq d_3-d_{30} \leq 270° \end{cases} \quad \text{ist,}
$$

wobei $d_{20}, d_{30}$ die momentanen Doppelbrechungen des zweiten bzw. dritten doppelbrechenden Elementes (E2,E3) unmittelbar vor dem Verstellen darstellen.

Der vierte Verfahrensschritt stellt die Modifikation eines aus Electronics Letters aa0 bekannten Verstellmechanismus dar, bei dem der Doppelbrechungsbereich des zweiten doppelbrechenden Elements (E2) um 90° gegenüber dem des dritten Elements nach dem bekannten Stand der Technik verschoben wurde und bei dem eine andere Anordnung von doppelbrechenden Elementen gewählt wurde, außerdem wurde auf das bei der bekannten Anordnung verwendete zirkular doppelbrechende Element verzichtet.

Zur Endlos-Polarisationsregelung ist eine der folgenden Kombinationen der beschriebenen Verfahrensschritte 1 bis 4 ausreichen. Es sind bei Regelung des ersten und zweiten doppelbrechenden Elements El, E2 die Verfahrensschritte 1 und 3 anzuwenden; bei der Regelung des zweiten und dritten doppelbrechenden Elements E2, E3 sind die Verfahrensschritte 4 und wahlweise 2 oder 3 anzuwenden und dabei der Arbeitspunkt des ersten Elements El auf ungeradzahlige Vielfache von 90° zu setzen; bei der Regelung des ersten und dritten doppelbrechenden Elements El, E3 sind die Verfahrensschritte 1 und 4 anzuwenden und dabei der Arbeitspunkt der Doppelbrechung des zweiten Elements E2 auf ungeradzahlige Vielfache von 90° zu setzen und bei Verstellung aller drei Elemente El, E2, E3 sind die Verfahrensschritte 1, 3, 4 anzuwenden.

Die Verfahrensschritte 1 und 2 betreffen seltener auftretende Spezialfälle, bei denen der Polarisationszustand am zweiten bzw. dritten Element E2,E3 jeweils gleich einem Eigenmodus des betreffenden Elementes ist. Die Beherrschung dieser Spezialfälle mittels der Verfahrensschritte 1 oder 2 ermöglicht aber gerade den Aufbau einer Endlos-Polarisationsregelung mit nur 3 Elementen. Anschließend soll deshalb der Verstellbetrieb für den Verfahrensschritt 2 an Hand der Poincaré-Kugel erklärt werden.

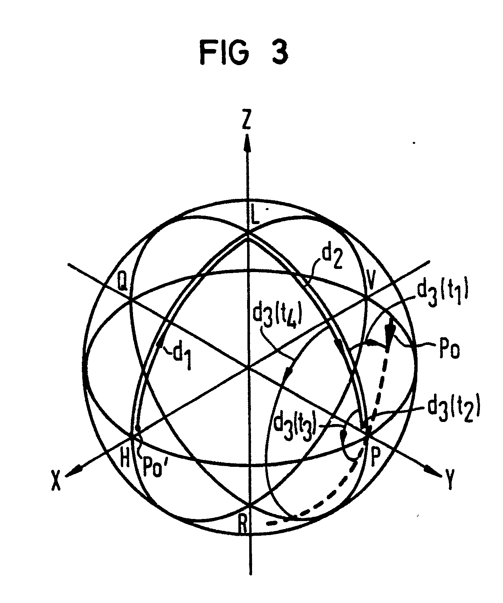

Zur Beschreibung der Polarisation dient eine Poincaré-Kugel entsprechend Fig. 3. Jedem Polarisationszustand ist eineindeutig ein bestimmter Punkt auf der Kugeloberfläche zugeordnet. Die Hauptachsen der linear doppelbrechenden Elemente El, E3 sind dabei so gewählt, daß dieser Punkt mit dem Doppelbrechungswinkel des betreffenden Elementes auf der Kugeloberfläche um die Y-Achse gedreht wird, während die Hauptachse des linear doppelbrechenden Elementes E2 so gewählt ist, daß der bestimmte Punkt mit dem Doppelbrechungswinkel des betreffenden Elementes auf der Kugeloberfläche um die X-Achse gedreht wird.

Die Fig. 3 zeigt auf der Poincaré-Kugel den Betriebsfall, bei dem der Arbeitspunkt des Elements E2 die Bereichsgrenze erreicht hat und deshalb der Arbeitspunkt des Elementes E3 um 180° verschoben wird.

Auf der Poincaré-Kugel ist die Transformation eines festen Eingangspolarisationszustandes Po' durch die 3 doppelbrechenden Elemente in einen variablen Ausgangspolarisationszustand Po gezeigt. Außerdem

5

ist als unterbrochene Linie die Wanderung der Ausgangspolarisation Po, die zu einer bestimmten Zeit $t_x$ durch den Punkt P läuft, eingezeichnet. Zusätzlich geben weitere, nichtunterbrochene Linien die dabei auftretenden Verstellwege $d_1,d_2,d_3$ der einzelnen doppelbrechenden Elemente E1,E2,E3 an, diese Verstellwege entsprechen den Beträgen der Doppelbrechungen der Elemente E1,E2,E3.

Für bestimmte Zeiten $t_1,t_2,t_3,t_4$ sind die Verstellwege $d_3$ des dritten doppelbrechenden Elements E3 dargestellt. Es ist erkennbar, daß der Verstellweg $d_2$ des zweiten Elements zunächst zunimmt, bis Po den Punkt P erreicht hat. Das Element E3 wird nun um 180° zurückgesetzt, und beim weiteren Verlauf der Polarisation Po in den unteren Bereich der Poincaré-Kugel reduziert sich der Betrag des Verstellweges wieder von 90° auf geringere Werte und die Bereichsgrenze des Elements E2 wird verlassen.

Anstelle von in einem lokalen Laser erzeugten Licht mit einer Polarisation gleich einem Eigenmodus des zweiten doppelbrechenden Elementes oder mit oder mit einer Polarisation, die durch das erste Element E1 in einen Eigenmodus des zweiten Elements E2 übergeführt werden kann, kann diese Welle auch beliebige Polarisation aufweisen. In diesem Fall ist den drei vorhandenen Elementen E1, E2, E3 ein weiteres Element E0 mit einem schnellen Eigenmodus entsprechend dem des Elements E2 vorgeschaltet. Dabei werden die Doppelbrechungen aller Elemente moduliert und durch die Regelung die Intensität des vom Detektor abgegebenen Signals maximiert. Nach Erreichen der maximalen Intensität des vom Detektor abgegebenen Signals wird dieses konstant gehalten und es werden die durch die Modulation der Arbeitspunkte des ersten und des zweiten Elements erzeugten Wechselanteile in ihrer Amplitude maximiert. Mit der Modulation des Arbeitspunktes des Elements E1 erfolgt eine Optimierung der Arbeitspunkte der Elemente E0, E2, E3; während bei Modulation des Arbeitspunktes des Elements E2 die Arbeitspunkte der Elemente E0,E1, E3 optimiert werden.

Im Polarisationstransformator können auch elliptisch doppelbrechende oder zirkular doppelbrechende Elemente angeordnet sein. Voraussetzung ist dabei, daß ein doppelbrechendes Element mit einer Doppelbrechung von etwa 180° bei Anregung mit einem Eigenmodus eines der benachbarten Elemente wenigstens annähernd des zweiten, dazu orthogonalen Eigenmodus erzeugt.

Bei unterschiedlicher Lage der Eigenmoden eines bestimmten Elementes und des dazu übernächsten Elementes werden die Doppelbrechung des dazwischenliegenden Elements und deren Bereichsgrenzen um denjenigen Wert erhöht, der bei Anliegen am dazwischenliegenden Element Licht mit einer dem schnellem Eigenmodus des bestimmten Elements entsprechenden Polarisation in Licht mit einer Polarisation transformiert, die dem schnellem Eigenmodus des übernächsten Elements entspricht.

In der Darstellung auf der Poincarékugel wird von einem doppelbrechenden Element der Polarisationszustand des durchlaufenden Lichtsignals um eine Achse gedreht, die sich als Verbindungslinie der beiden Eigenmoden des Elements ergibt. Die oben genannte Voraussetzung äußert sich dabei auf der Poincarékugel so, daß die Achsen jeweils benachbarter Elemente aufeinander senkrecht stehen.

## Ansprüche

1. Verfahren zur Polarisationsregelung von sichtbaren kohärenten Lichtsignalen und von kohärenten Signalen der angrenzenden Wellenlängenbereiche, die drei doppelbrechende Elemente eines Polarisationstransformators durchlaufen, bei dem die Doppelbrechungen der drei Elemente in Abhängigkeit von Stellsignalen kontinuierlich verändert werden können, wobei im Falle der ausschließlichen Verwendung linear doppelbrechender Elemente die Azimutwinkel von jeweils zwei benachbarten Elementen um etwa 45° im positiven oder negativen Drehsinn gegeneinander verdreht sind,
daß für eine Endlos-Polarisationsregelung die drei Elemente neben linearer auch elliptische oder zirkulare Doppelbrechung aufweisen können und so angeordnet sind, daß ein doppelbrechendes Element mit einer Doppelbrechung von etwa 180° bei Anregung mit einem Eigenmodus eines der benachbarten Elemente wenigstens annähernd den zweiten, dazu orthogonalen Eigenmodus erzeugt,
daß bei unterschiedlicher Lage der Eigenmoden eines bestimmten Elementes und des dazu übernächsten Elements die Doppelbrechung des dazwischenliegenden Elements und deren Bereichsgrenzen um denjenigen Wert erhöht werden, der bei Anliegen am dazwischenliegenden Element Licht mit einer dem schnellen Eigenmodus des bestimmten Elements entsprechenden Polarisation in Licht mit einer Polarisation transformiert, die dem schnellen Eigenmodus des übernächsten Elements entspricht,
daß die Polarisation des Lichts an der dem zweiten Element (E2) abgewandten Seite des ersten Elements (El) einem Eigenmodus des zweiten Elements (E2) entspricht,
daß die Stellsignale durch Vergleich des Polarisationszustandes des Lichtsignals mit einem Referenz-Polarisationszustand eines zweiten Lichtsignals oder eines polarisationsselektiven Elements mittels eines Analysators oder eines Überlagerungsempfängers erzeugt werden,
daß die Intensität sowie die in Abhängigkeit von der veränderten Doppelbrechung wenigstens eines der doppelbrechenden Elemente (E1, E2,E3) auftretenden Intensitätsänderungen des Vergleichssignals bestimmt werden, daß daraus die Stellsignale gewonnen werden, die die Arbeitspunkte der Doppelbrechung wenigstens von zwei der doppelbrechenden Elemente verstellen und dadurch die Intensität des Vergleichssignals wahlweise maximiert oder auf einen vorgegebenen Wert eingeregelt wird, daß bei Annäherung der Arbeitspunkte der einzelnen Elemente (E1,E2, E3) an deren Bereichsgrenzen für die Doppelbrechung die folgenden Verfahrensschritte getroffen werden können:

1. Begrenzung der Doppelbrechung ($d_1$) des ersten Elements (EI) an den als ganzzahlige Vielfache von 180° gewählten Bereichsgrenzen und wahlweise Umschalten der Doppelbrechung ($d_2$) des zweiten Elementes (E2) um 180°;

2. Begrenzung der Doppelbrechung ($d_2$) des zweiten Elements (E2) an den als ungerade Vielfache von 90° gewählten Bereichsgrenzen sofern die Doppelbrechung ($d_1$) des ersten Elements (EI) ein ungerades Vielfaches von 90° beträgt und wahlweise Umschalten der Doppelbrechung ($d_3$) des dritten Elements (E3) um 180°;

3. nach Annäherung des Arbeitspunktes der Doppelbrechung ($d_2$) des zweiten Elements an die als ganzzahlige Vielfache von 180° gewählten Bereichsgrenzen, synchrones Verstellen der Doppelbrechung ($d_1$,$d_3$) des ersten und dritten Elements (EI,E3) bis die Doppelbrechung ($d_1$) des ersten Elements (EI) ein Vielfaches von 180° erreicht, anschließend Verstellen der Doppelbrechung ($d_2$) des zweiten Elements (E2) um ein ganzzahliges Vielfaches von 180° und abschließend synchrones Verstellen des ersten und dritten Elements (E1,E3), wobei die synchronen Verstellungen gleichsinnig erfolgen, wenn die Doppelbrechung ($d_2$) des zweiten Elements (E2) zum Zeitpunkt des Verstellens ein ungeradzahliges Vielfaches von 180° beträgt und gegensinnig bei geradzahligen Vielfachen von 180°;

4. Verhinderung des Überschreitens der Bereichsgrenzen der Doppelbrechung des dritten Elements (E3) durch lineare Verstellung der Doppelbrechung ($d_3$) des dritten Elements (E3) bei gleichzeitiger periodischer Verstellung der Doppelbrechungen ($d_1$,$d_2$) des ersten und zweiten Elements (EI, E2), wobei sich die Doppelbrechungen($d_1$,$d_2$)des ersten und zweiten Elementes(EI, E2)dadurch ergeben, daß

für $d_{20} \neq 180°$ oder $0°$:

$$d_1 = \cos^{-1}(-\cos d_2 \cdot \sin (d_3 - d_{30}))$$

$$d_2 = \begin{cases} 90° + \sin^{-1}\left(\dfrac{-\cos d_2 \cdot \cos d_3}{\sqrt{1 - \cos^2 d_2 \sin^2 d_3}}\right) & \text{für } 0° < d_2 - d_{20} < 180° \\[4ex] -90° - \sin^{-1}\left(\dfrac{-\cos d_2 - \cos d_3}{\sqrt{1 - \cos^2 d_2 \sin^2 d_3}}\right) & \text{für } -180° < d_2 - d_{20} < 0° \end{cases}$$

ist, und

für $d_{20} = 180°$ oder $0°$:

$$d_1 = \begin{cases} 90° + (d_3 - d_{30}) & \text{für } -90° \leq d_3 - d_{30} \leq 90° \\ 270° - (d_3 - d_{30}) & \text{für } 90° \leq d_3 - d_{30} \leq 270° \end{cases}$$

$$d_2 = \begin{cases} 180° & \text{für } -90° \leq d_3 - d_{30} \leq 90° \\ 0° & \text{für } 90° \leq d_3 - d_{30} \leq 270° \end{cases} \text{ ist}$$

und von diesen Verfahrensschritten wenigstens eine der folgenden Kombinationen zur Endlos-Regelung auszuwählen ist:

bei Regelung des ersten und zweiten doppelbrechenden Elements (E1,E2) sind die Verfahrensschritte 1 und 3 anzuwenden;

bei der Regelung des zweiten und dritten doppelbrechenden Elements (E2, E3) sind die Verfahrensschritte 4 und wahlweise 2 oder 3 anzuwenden und dabei der Arbeitspunkt des ersten Elements (El) auf ungeradzahlige Vielfache von 90° zu setzen;

bei der Regelung des ersten und dritten doppelbrechenden Elements (El,E3) sind die Verfahrensschritte 1 und 4 anzuwenden und dabei der Arbeitspunkt der Doppelbrechung (d₂) des zweiten Elements (E2) auf ungeradzahlige Vielfache von 90° zu setzen und bei Verstellung aller drei Elemente (El,E2,E3) sind die Verfahrensschritte 1, 3, 4 anzuwenden.

2. Verfahren nach Anspruch 1,
**dadurch gekennzeichnet,**
daß bei Verwendung eines Überlagerungsempfängers für den Vergleich der Polarisationszustände das erzeugte Überlagerungssignal als Vergleichssignal dient.

3. Verfahren nach Anspruch 1 oder 2,
**dadurch gekennzeichnet,**
daß die Intensitätsänderungen des Vergleichssignals durch Modulation der Doppelbrechung von wenigstens zwei der dop - pelbrechenden Elemente (El,E2,E3) erzeugt werden.

4. Verfahren nach Anspruch 1 oder 2,
**dadurch gekennzeichnet,**
daß bei einem von einem Eigenmodus des zweiten Elements (E2) abweichenden Polarisationszustand des an der dem zweiten Element (E2) abgewandten Seite des ersten Elements (El) auftretenden Lichtsignals die Doppelbrechung des ersten Elements (El) geändert wird.

5. Verfahren nach Ansprüchen 1 bis 4,
**dadurch gekennzeichnet,**
daß zur Verarbeitung ankommender Lichtsignale beliebiger Polarisation den drei vorhandenen Elementen (El,E2,E3) ein weiteres Element (E0) mit Eigenmoden entsprechend den im Anspruch 1 enthaltenen Bedingungen für die Eigenmoden der anderen Elemente (E1, E2, E3) vorgeschaltet ist und die Doppelbrechungen aller Elemente moduliert werden, daß bei maximiertem Vergleichssignal die durch die Modulation der Arbeitspunkte des ersten und zweiten Elements (El,E2) erzeugten Wechselanteile in ihrer Amplitude maximiert werden und daß dabei die Modulation des einen Elements zur Optimierung der Arbeitspunkte der anderen Elemente dient.

6. Anordnung zur Durchführung des Verfahrens nach einem der vorhergehenden Ansprüche,
**dadurch gekennzeichnet,**
daß die Elemente in der Reihenfolge erstes, zweites, drittes Element (E1,E2,E3) in dem einen Lichtweg zwischen dem Eingang (L0) für das Licht des lokalen Lasers und dem Analysator oder dem Uberlagerungsempfänger oder zumindest teilweise im anderen Lichtweg zwischen dem Eingang (ES) für das Empfangslicht und dem Analysator oder dem Überlagerungsempfänger angeordnet sein können, wobei die Reihenfolge der Elemente (El, E2, E3), vom Eingang (L0) für das Licht des lokalen Lasers über den Analysator oder den Überlagerungempfänger zum Eingang (ES) für das Empfangslicht betrachtet, beibehalten wird.

## Claims

1. Method for controlling the polarization of visible coherent light signals and of coherent signals of the adjoining wave length bands, which pass through three double-refracting elements of a polarisation transformer in which the double refractions of the three elements can be continuously changed in dependence on adjustment signals, in which arrangement, in the case of the exclusive use of linear double-refracting elements, the azimuth angles of in each case two adjacent elements are rotated with respect to one another by about 45° in the positive or negative direction of rotation, that for a continuous polarization control, the three elements can exhibit, in addition to linear double refraction also elliptical or circular double refraction and are arranged in such a manner that a double-refracting element with a double refraction of about 180° generates, when excited with an eigenmode of one of the adjacent elements, at least approximately the second eigenmode orthogonal thereto, that with a different position of the eigenmodes of a particular element and of the element next but one thereto, the double refraction of the intermediate element and its band limits are increased by the value which, when resting against the intermediate element, transforms light with a polarization corresponding to the fast eigenmode of the particular element into light having a polarization which corresponds to the fast eigenmode of the element next but one, that the polarization of the light on the side of the first element (E1) facing away from the second element (E2) corresponds to an eigenmode of the second element (E2), that the adjustment signals are generated by comparison of the state of polarization of the light signal with a reference state of polarization of a second light signal or of a polarisation-selective element by means of an analyzer or a heterodyne receiver, that the intensity and the intensity changes, occurring in dependence on the changed double refraction of at least one of the doublerefracting elements (E1, E2, E3) of the reference signal are determined, that from this the adjustment signals are obtained which adjust the operating points of the double refraction of at least two of the double-refracting elements and as a result the intensity of the reference signal is optionally maximized or corrected to a predetermined value, that when the operating points of the individual elements (EI, E2, E3) approach their band limits for the double refraction, the following method steps can be taken:

1. limiting the double refraction ($d_1$) of the first element (E1) at the band limits selected as integral multiples of 180° and optional switching-over of the double refraction ($d_2$) of the second element (E2) by 180°;

2. limiting the double refraction ($d_2$) of the second element (E2) at the band limits selected as odd multiples of 90°, if the double refraction ($d_1$) of the first element (E1) is an odd multiple of 90°, and optional switchingover of the double refraction ($d_3$) of the third element (E3) by 180°;

3. after approach of the operating point of the double refraction ($d_2$) of the second element to the band limits selected as integral multiples of 180°, synchronous adjustment of the double refraction ($d_1$, $d_3$) of the first and third element (E1, E3) until the double refraction ($d_1$) of the first element (E1) reaches a multiple of 180°, subsequent adjustment of the double refraction ($d_2$) of the second element (E2) by an integral multiple of 180° and, finally, synchronous adjustment of the first and third element (EI, E3), the synchronous adjustments occurring in the same direction when the double refraction ($d_2$) of the second element (E2) is an odd-numbered multiple of 180° at the time of the adjustment and in opposite directions with even-numbered multiples of 180°;

4. preventing the exceeding of the band limits of the double refraction of the third element (E3) by linear adjustment of the double refraction ($d_3$) of the third element (E3) with simultaneous periodic adjustment of the double refractions ($d_1$, $d_2$) of the first and second element (E1, E2), the double refractions ($d_1$, $d_2$) of the first and second element (E1, E2) resulting from the fact that for $d_{20}$ 180° or 0°:

$$d_1 = \cos^{-1}(-\cos d_2 \cdot \sin(d_3 - d_{30}))$$

$$d_2 = \begin{cases} 90° + \sin^{-1}\left(\dfrac{-\cos d_2 \cdot \cos d_3}{\sqrt{1-\cos^2 d_2 \sin^2 d_3}}\right) & \text{for } 0° < d_2-d_{20} < 180° \\[4em] -90° - \sin^{-1}\left(\dfrac{-\cos d_2 - \cos d_3}{\sqrt{1-\cos^2 d_2 \sin^2 d_3}}\right) & \text{for } -180° < d_2-d_{20} < 0° \end{cases}$$

and
for $d_{20} = 180°$ or 0°:

$$d1 = \begin{cases} 90° + (d_3 - d_{30}) \text{ for } -90°{\leq}d_3-d_{30}{\leq}90° \\ 270° - (d_3 - d_{30}) \text{ for } 90°{\leq}d_3-d_{30}{\leq}270° \end{cases}$$

$$d_2 = \begin{cases} 180° \quad \text{ for } -90° {\leq}d_3-d_{30}{\leq}90° \\ 0° \quad \text{ for } 90° {\leq}d_3-d_{30}{\leq}270° \end{cases}$$

and of these method steps, at least one of the following combinations is to be selected for the continuous control:

when controlling the first and second double-refracting element (EI, E2), method steps 1 and 3 must be used; when controlling the second and third double-refracting element (E2, E3), method steps 4 and optionally 2 or 3 must be used and in this connection the operating point of the first element (EI) must be set to odd-numbered multiples of 90°;

when controlling the first and third double-refracting element (EI, E3), method steps 1 and 4 must be used and in this connection the operating point of the double refraction ($d_2$) of the second element (E2) must be set to odd-numbered multiples of 90° and, when adjusting all three elements (E1, E2, E3), method steps 1, 3, 4 must be used.

2. Method according to Claim 1, characterized in that when using a heterodyne receiver for comparing the states of polarization, the heterodyne signal generated is used as reference signal.

3. Method according to Claim 1 or 2, characterized in that the intensity changes of the reference signal due to modulation of the double refraction are generated by at least two of the double-refracting elements (E1, E2, E3).

4. Method according to Claim 1 or 2, characterized in that with a state of polarization which deviates from an eigenmode of the second element (E2), of the light signal occurring on the side of the first element (EI) facing away from the second element (E2), the double refraction of the first element (EI) is changed.

5. Method according to Claims 1 to 4, characterized in that for processing incoming light signals of arbitrary polarization, the three existing elements (EI, E2, E3) are preceded by a further element (E0) having eigenmodes corresponding to the conditions for the eigenmodes of the other elements (EI, E2, E3), contained in Claim 1, and the double refractionz of all elements are modulated, in that with a maximised reference signal, the alternating components generated by the modulation of the operating points of the first and second element (EI, E2) are maximized in their amplitude and in that in this process the modulation of one element is used for optimising the operating points of the other elements.

6. Arrangement for carrying out the method according to one of the preceding claims, characterized in that the elements can be arranged in the order of first, second, third element (EI, E2, E3) in one light path between the input (LO) for the light of the local laser and the analyser or the heterodyne receiver or at least partially in the other light path between the input (ES) for the received light and the analyser or the heterodyne receiver, the order of the elements (EI, E2, E3), seen from the input (LO) for the light of the local laser via the analyser or the heterodyne receiver to the input (ES) for the received light, being retained.

## Revendications

1. Procédé pour régler la polarisation de Signaux cohérents de lumière visibles et de signaux cohérents des plages contiguës de longueurs d'onde, qui traversent trois éléments biréfringents d'un transformateur de polarisation, et selon lequel on peut modifier continûment les biréfringences des trois éléments en fonction de signaux de réglage, auquel cas, lors de l'utilisation exclusive d'éléments biréfringents linéaires, les angles azimutaux de deux éléments respectivement voisins sont dirigés en des sens opposés sur environ 45° dans le sens de rotation positif ou dans le sens de rotation négatif, dans lequel

pour une régulation continue de la polarisation, les trois éléments peuvent présenter, en-dehors d'une biréfringence linéaire, également une biréfringence elliptigue ou circulaire et sont disposés de telle sorte qu'un élément biréfringent présentant une biréfringence d'environ 180° produit, lorsgu'il est excité avec un mode propre de l'un des élénents voisins, au moins approximativement le second mode propre, orthogonal au premier,

dans le cas d'une position différente des modes propres d'un élément déterminé et de l'élément situé deux éléments plus loin par rapport a l'élément déterminé, la biréfringence de l'élément intercalaire et ses limites de zone sont accrues de la valeur qui, dans le cas de son application a l'élément intercalaire, transforme la lumière possédant une polarisation correspondant au mode propre rapide de l'élément déterminé, en une lumière possédant une polarisation qui correspond au mode propre rapide de l'élément suivant en second,

la polarisation de la lumière sur le côté du premier élément (E1), tourné à l'opposé du second élément (E2), correspond à un mode propre du second élément (E2),

les signaux de réglage sont produits par comparaison de l'état de polarisation du signal lumineux à un état de polarisation de référence d'un second signal lumineux ou d'un élément sélectif du point de vue de la polarisation, à l'aide d'un analyseur ou d'un récepteur superhétérodyne,

l'intensité ainsi que les variations d'intensité d'un signal de comparaison, qui apparaissent en fonction de la modification de la biréfringence d'au moins l'un des éléments biréfringents (E1,E2,E3), sont déterminées et à partir de là on obtient les signaux de réglage qui représentent les points de fonctionnement de la biréfringence d'au moins deux des éléments biréfringents et, de ce fait, au choix on rend maximale l'intensité du signal de comparaison ou on la règle sur une valeur prédéterminée, et, lorsque les points de fonctionnement des différents éléments (E1,E2,E3) se rapprochent de leurs limites de zone pour la biréfringence, on peut mettre en oeuvre les étapes opératoires suivantes :

1. limitation de la biréfringence ($d_1$) du premier élément (E1) au niveau des limites de zone choisies à des multiples entiers de 180° et commutation à volonté de la biréfringence ($d_2$) du second élément (E2) sur 180° ;

2. limitation de la biréfringence ($d_2$) du second élément (E2) au niveau des limites de zone choisies égales à des multiples impairs de 90°, dans la mesure où la biréfringence ($d_1$) du premier élément (E1) est égale à un multiple impair de 90° et commutation à volonté de la biréfringence ($d_3$) du troisième élément (E3) sur 180° ;

3. une fois que le point de fonctionnement de la biréfringence ($d_2$) du second élément s'est rapproché des limites de zone choisies égales à des multiples entiers de 180°, réglage synchrone de la biréfringence ($d_1,d_2$) des premier et troisième éléments (E1,E3) jusqu'à ce que la biréfringence ($d_1$) du premier élément (E1) soit égale à un multiple de 180°, puis décalage de la biréfringence ($d_2$) du second élément (E2), d'un multiple entier de 180° et finalement décalage synchrone des premier et troisième éléments (E1,E3), les décalages synchrones s'effectuant dans le même sens lorsque la biréfringence ($d_2$) du second élément (E2) est égale à un multiple impair de 180° à l'instant du décalage, et en sens opposé dans le cas de multiples pairs de 180° ;

4. suppression du dépassement des limites de zone de la biréfringence du troisième élément (E3) au moyen des réglages linéaires de la biréfringence ($d_3$) du troisième élément (E3) moyennant un réglage périodique simultané des biréfringences ($d_1,d_2$) des premier et second éléments (E1,E2), les biréfringences ($d_1,d_2$) des premier et second éléments (E1,E2) étant obtenues grâce au fait que

pour $d_{20} \neq 180°$ ou $0°$ :

$$d_1 = \cos^{-1}(-\cos d_2 \cdot \sin(d_3-d_{30}))$$

$$d_2 = \begin{cases} 90° + \sin^{-1}\left(\dfrac{-\cos d_2 \cdot \cos d_3}{\sqrt{1-\cos^2 d_2 \sin^2 d_3}}\right) & \text{pour } 0°<d_2-d_{20}<180° \\[4em] -90° - \sin^{-1}\left(\dfrac{-\cos d_2 - \cos d_3}{\sqrt{1-\cos^2 d_2 \sin^2 d_3}}\right) & \text{pour } -180°<d_2-d_{20}<0° \end{cases}$$

et pour $d_{20} = 180°$ ou $0°$ :

$$d_1 = \begin{cases} 90° + (d_3 - d_{30}) \text{ pour } -90° \leq d_3 - d_{30} \leq 90° \\ \\ 270° - (d_3 - d_{30}) \text{ pour } 90° \leq d_3 - d_{30} \leq 270° \end{cases}$$

$$d2 = \begin{cases} 180° \qquad \text{pour } -90° \leq d_3 - d_{30} \leq 90° \\ \\ 0° \qquad \text{pour } 90° \leq d_3 - d_{30} \leq 270°, \end{cases}$$

et parmi ces étapes opératoires, il faut choisir, pour la régulation continue, au moins l'une des combinaisons suivantes :

lors de la régulation des premier et second éléments biréfringents (E1, E2), il faut utiliser les étapes opératoires 1 et 3;

lors de la régulation des second et troisième éléments biréfringents (E2,E3), il faut utiliser les étapes opératoires 4 et au choix 2 ou 3 et régler le point de fonctionnement du premier élément (E1) sur des multiples impairs de 90°;

lors de la régulation des premier et troisièmes éléments biréfringents (E1, E3), il faut utiliser les étapes opératoires 1 et 4 et régler le point de fonctionnement de la biréfringence ($d_2$) du second élément (E2) sur des multiples impairs de 90°, et lors du décalage de l'ensemble des trois éléments (E1,E2,E3), il faut utiliser les étapes opératoires 1,3,4.

2. Procédé suivant la revendication 1, caractérisé par le fait que dans le cas de l'utilisation d'un récepteur superhétérodyne pour la comparaison des états de polarisation, on utilise le signal hétérodyne produit en tant que signal de compraison.

3. Procédé suivant la revendication 1 ou 2, caractérisé par le fait que les modifications de l'intensité du signal de comparaison sont produites au moyen d'une modulation de la biréfringence d'au moins deux des éléments biréfringents (E1,E2,E3).

4. Procédé suivant la revendication 1 ou 2, caractérisé par le fait que, dans le cas d'un état de polarisation, qui s'écarte d'un mode propre du second élément (E2), du signal lumineux apparaissant sur le côté du premier élément (E1), situé a l'opposé du second élément (E2), la biréfringence du premier élément (E1) est modifiée.

5. Procédé suivant les revendications 1 à 4, caractérisé par le fait que pour le traitement de signaux lumineux arrivants possédant une polarisation quelconque, en amont des trois éléments présents (E1,E2,E3) est branché un autre élément (E0) possédant des modes propres correspondant aux conditions, contenues dans la revendication 1, pour les modes propres des autres éléments (E1, E2, E3), et les biréfringences de tous les éléments sont modulées, et que, lorsque pour le signal de comparaison rendu maximum, les amplitudes des composantes alternatives produites par la modulation des points de fonctionnement des premier et second éléments (E1,E2) sont rendues maximales et que la modulation d'un élément est utilisée pour optimiser les points de fonctionnement des autres éléments.

6. Dispositif pour la mise en oeuvre du procédé suivant l'une des revendications précédentes, caractérisé par le fait que les éléments peuvent être disposés, dans la succession correspondant au premier élément, au second élément et au troisième élément (E1,E2,E3) dans une branche de transmission de la lumière entre l'entrée (L0) pour la lumière du laser local et l'analyseur ou le récepteur superhétérodyne ou au moins en partie dans l'autre voie de transmission de la lumière entre l'entrée (ES) pour la lumière reçue et l'analyseur ou le récepteur superhétérodyne, la succession des éléments (E1,E2,E3) étant conservée lorsqu'on considère le traiet partant de l'entrée (L0) pour la lumière du laser local et passant par, l'analyseur ou le récepteur superhétérodyne pour aboutir à l'entrée (ES) pour la lumière reçue.

# FIG 1

# FIG 2

# FIG 3